# EUROPEAN PATENT APPLICATION

(11) **EP 3 517 230 A1**
(43) Date of publication of application: **31.07.2019**
(21) Application number: 17852912.9
(22) Date of filing: 13.09.2017
(51) Int. Cl.: B21K 1/08, B21J 5/02, F16C 3/08

(54) **METHOD FOR MANUFACTURING FORGED CRANKSHAFT**

(30) Priority: 20.09.2016 JP 2016182710
(71) Applicant: Nippon Steel Corporation, Tokyo (JP)
(72) Inventor: OKUBO, Junichi, Tokyo 100-8071 (JP); TAMURA, Kenji, Tokyo 100-8071 (JP); YOSHIDA, Kunihiro, Tokyo 100-8071 (JP); HWANG, Sam Soo, Tokyo 100-8071 (JP); NAKANO, Ryusuke, Tokyo 100-8071 (JP); HORI, Masao, Tokyo 100-8071 (JP)
(74) Representative: Zimmermann & Partner Patentanwälte mbB
(86) International application number: PCT/JP2017/032999
(87) International publication number: WO 2018/056135

(57) **Abstract**

Provided is a production method, including a first preforming process for obtaining a first preform from a billet, a second preforming process for obtaining a second preform from the first preform, a final preforming process for obtaining a final preform from the second preform, and a finish forging process for forming the final preform into a finishing dimension of the crankshaft by die forging. In the first preforming process, regions to be a pin and a journal are pressed respectively from a direction perpendicular to an axial direction of the billet, thus reducing cross sectional areas of each region and forming a plurality of flat parts. In the second preforming process, the first preform is pressed in the pressing direction, which is a width direction of the flat parts. In the final preforming process, the second preform is pressed from a direction perpendicular to an axial direction of the second preform, and further a region to be a counterweight and a region to be a crank arm integrally including a counterweight are pressed in the axial direction of the second preform.

## Description

### TECHNICAL FIELD

The present invention relates to a method for producing a crankshaft by hot forging.

### BACKGROUND ART

A crankshaft is essential in a reciprocating engine for an automobile, a motorcycle, an agricultural machine, a ship, or the like to transform reciprocating movement of a piston into rotational movement for deriving power. A crankshaft can be produced either by die forging or casting. When high strength and high rigidity are required for a crankshaft, a crankshaft produced by die forging (hereinafter referred to as a "forged crankshaft") is often used.

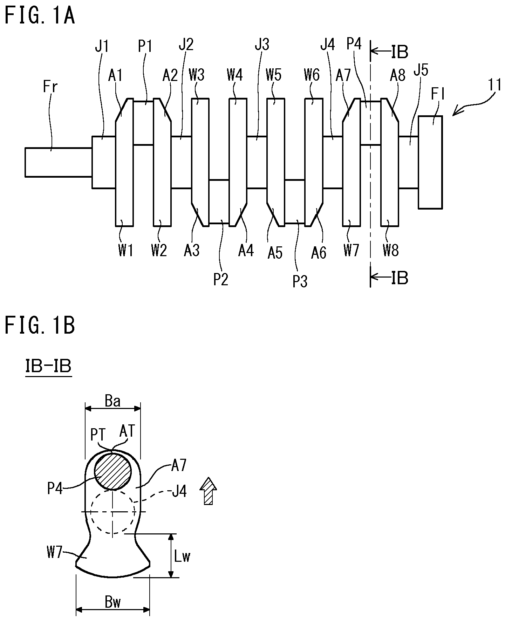

FIGS. 1A and 1B are schematic diagrams to illustrate an exemplary shape of a typical forged crankshaft. Among these figures, FIG. 1A is a general view and FIG. 1B is an IB-IB sectional view. The example shown in FIG. 1B representatively shows one crank arm A7, a counterweight W7 that is integral with the crank arm A7, and a pin P4 and a journal J4, which are connected to the crank arm A7.

The crankshaft 11 shown in FIGS. 1A and 1B is a crankshaft of 4-cylinder 8-counterweight to be mounted on a 4-cylinder engine. The crankshaft 11 includes five journals J1 to J5, four pins P1 to P4, a front part Fr, a flange part Fl, and eight crank arms (hereinafter also referred to as "arms") A1 to A8. The arms A1 to A8 connect the journals J1 to J5 with the pins P1 to P4, respectively. Moreover, eight (in all) arms A1 to A8 integrally include counterweights (hereinafter, also referred to as "weights") W1 to W8, respectively. A front part Fr is provided at a front end in the axial direction of the crankshaft 11, and a flange part Fl is provided at a rear end thereof. The front part Fr is connected to the front most first journal J1, and the flange part Fl is connected to the rear most fifth journal J5.

Hereinafter, when collectively referring to the journals J1 to J5, the pins P1 to P4, the arms A1 to A8, and the weights W1 to W8, respectively, their symbols are also denoted as "J" in the journals, "P" in the pins, "A" in the arms, and "W" in the weights. Moreover, the arm A and the weight W that is integral with the arm A are collectively referred to as a "web".

As shown in FIG. 1B, a width Bw of the weight W is more than a width Ba of the arm A. Therefore, the weight W largely projects from an arm center plane (plane including center axes of the pin P and the journal J).

When producing a forged crankshaft having such shape, in general, a billet is used as the starting material. A section perpendicular to the longitudinal direction of the billet, that is, a cross section thereof has circular or rectangular shape. The area of the cross section is constant over the entire length of the billet. The term "cross section" as used herein means a section perpendicular to the longitudinal direction of the billet or each preform to be described below, or the axial direction of a crankshaft. The term "longitudinal section" means a section in parallel with the longitudinal direction or the axial direction. Also, the area of a cross section is simply referred to as a "cross sectional area". A forged crankshaft is produced by performing a preforming process, a die forging process, and a flash-trimming process in that order. Moreover, as required, a coining process is performed after the flash-trimming process. Typically, the preforming process includes a roll forming process and a bend forging process. The die forging process includes a rough forging process and a finish forging process.

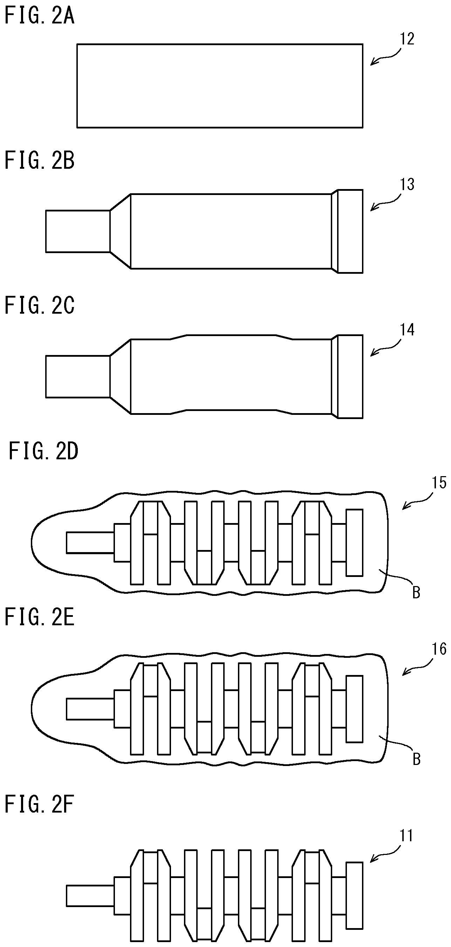

FIGS. 2A to 2F are schematic diagrams to illustrate a conventional production process of a typical forged crankshaft. Among these figures, FIG. 2A shows a billet; FIG. 2B a rolled preform; FIG. 2C a bent preform; FIG. 2D a rough forged preform; FIG. 2E a finish forged preform; and FIG. 2F a forged crankshaft. It is noted that FIGS. 2A to 2F show a series of processes when producing the crankshaft 11 having a shape shown in FIGS. 1A and 1B.

Referring to FIGS. 2A to 2F, the production method of the forged crankshaft 11 will be described. First, a billet 12 having a predetermined length as shown in FIG. 2A is heated in a heating furnace and thereafter subjected to roll forming and bend forging in that order in the preforming process. In the roll forming process, the billet 12 is rolled by use of, for example, a grooved roll, thereby reducing the cross sectional area. As a result, the volume of the billet 12 is distributed in the axial direction to obtain a rolled preform 13 that is an intermediate starting material (see FIG. 2B). Next, in the bend forging, the rolled preform 13 is partly pressed in a direction perpendicular to the axial direction. As a result, the volume of the rolled preform 13 is distributed to obtain a bent preform 14 that is a further intermediate starting material (see FIG. 2C).

Successively, in the rough forging process, the bent preform 14 is subjected to forging by use of a vertical pair of dies to obtain a rough forged preform 15 (see FIG. 2D). The resulting rough forged preform 15 has an approximate shape of the crankshaft (final product) formed thereon. Further, in the finish forging process, the rough forged preform 15 is subjected to forging by use of a vertical pair of dies, to obtain a finish forged preform 16 (see FIG. 2E). The resulting finish forged preform 16 has been formed into a shape corresponding to that of the crankshaft as the final product. During the rough forging and finish forging, excess material flows out from between die parting surfaces of mutually opposed dies, forming flash B. As a result, each of the rough forged preform 15 and the finish forged preform 16 has pronounced flash B around its circumference.

In the flash-trimming process, for example, the finish forged preform 16 having flash is held by being sandwiched between a pair of dies, and in that state, the flash B is punched off by use of a tool die. As a result, the flash B is removed from the finish forged preform 16, and thereby a flash-free forged preform is obtained. The flash-free forged preform has an approximately same shape as that of the forged crankshaft 11 as shown in FIG. 2F.

In the coining process, principal parts of the flash-free forged preform are pressed slightly from upward and downward with dies so that the flash-free forged preform is reformed to have the same size and shape as those of the final product. Here, the principal portions of the flash-free forged preform include, for example, shaft portions such as the journals J, the pins P, the front part Fr, and the flange part Fl, and further the arms A and the weights W. Thus, the forged crankshaft 11 is produced.

The production process shown in FIGS. 2A to 2F can be applied to various crankshafts without being limited to the 4-cylinder 8-counterweight crankshaft shown in FIGS. 1A and 1B. For example, it can be applied to a 4-cylinder 4-counterweight crankshaft.

In the case of a 4-cylinder 4-counterweight crankshaft, among eight arms A1 to A8, some arms integrally include a weight W. For example, a foremost first arm A1, a rearmost eighth arm A8, and middle two arms (fourth arm A4 and fifth arm A5) integrally include a weight W, respectively. Moreover, the remaining arms, specifically the second, third, sixth, and seventh arms (A2, A3, A6, and A7), do not include any weight, and have an elongated circular shape, respectively.

Besides, even for crankshafts to be mounted on a 3-cylinder engine, a series 6-cylinder engine, a V-type 6-cylinder engine, an 8-cylinder engine, and the like, the production process will be the same. Note that when adjustment of the layout angle of pins is required, a twisting process is added after the flash-trimming process.

The principal purpose of the preforming process is to distribute the volume of the billet. Therefore, the shape of the forged crankshaft is hardly formed on the preform that is obtained by the preforming. By distributing the volume of the billet in the preforming process in this way, it is possible to reduce the formation of flash in the following die forging process, thereby improving material yield. Here, the term "material yield" means a fraction (percentage) of the volume of the forged crankshaft (final product) to that of the billet.

Techniques concerning production of a forged crankshaft are disclosed in Japanese Patent Application Publication No. 2001-105087 (Patent Literature 1), Japanese Patent Application Publication No. 02-255240 (Patent Literature 2), and Japanese Patent Application Publication No. 10-029032 (Patent Literature 3). Patent Literature 1 discloses a preforming method using a pair of upper and lower dies. In the preforming method, when a bar-like workpiece is pressed by the upper and lower dies, a part of the workpiece is elongated, and concurrently another part in continuous with that part is off set with respect to the axis. Patent Literature 1 states that since elongation and bending can be performed at the same time, it is possible to decrease the facility cost.

The preforming method of Patent Literature 2 uses a 4-pass high speed rolling facility instead of conventional 2-pass roll forming. In that preforming method, the cross sectional area of a rolled preform is determined according to the distribution of cross sectional areas of the weight, the arm, and the journal of a forged crankshaft (final product). Patent Literature 2 states that this allows improvement of material yield.

Patent Literature 3 discloses a technique of die forging in which a die forging direction (pressing direction) is a direction perpendicular to a projecting direction of the weight. Patent Literature 3 states that this makes it possible to improve fillability of material of the weight, which largely projects from a center plane of the arm, in die forging. In this technique of Patent Literature 3, a die-parting plane between upper and lower dies is disposed at a peak point of the projecting shape of the weight, and excess material flows out as flash from between the upper and lower dies.

### CITATION LIST

### PATENT LITERATURE

Patent Literature 1: Japanese Patent Application Publication No. 2001-105087
Patent Literature 2: Japanese Patent Application Publication No. 02-255240
Patent Literature 3: Japanese Patent Application Publication No. 10-029032
Patent Literature 4: International Application Publication No. WO2014/038183

### SUMMARY OF INVENTION

### TECHNICAL PROBLEM

In the production of a forged crankshaft, as described above, it is required to reduce formation of flash, thereby improving material yield. In the preforming method according to Patent Literature 1, it is possible to perform, to some extent, distribution of the volume of billet and offset.

However, according to the preforming method of Patent Literature 1, distribution of volume between a region to be a weight, and a region to be an arm, which integrally includes a weight, is not studied, in a region to be a web. For that reason, in the following die forging process, fillability of material becomes insufficient in a weight that largely projects from the center plane of the arm, and under-filling is likely to occur. To prevent under-filling of the weight, it is convenient to increase excess volume in the preform. However, in such a case, material yield will decline. Hereinafter, a region to be a weight is referred to as a "weight-corresponding part". A region to be an arm, which integrally includes a weight but the weight is excluded, is referred to as an "arm-corresponding part". The weight-corresponding part and the arm-corresponding part are also collectively referred to as a "web-corresponding part".

In the preforming method of Patent Literature 2, it is not possible to perform volume distribution between the weight-corresponding part and the arm-corresponding part in the web-corresponding part. This is also because the method relies on roll forming. Therefore, fillability of the material of the weight becomes insufficient in the following die forging process. As a result, under-filling is likely to occur.

According to the technique of Patent Literature 3, it is possible to some extent to improve the fillability of material of the weight in die forging. However, in the technique of Patent Literature 3, material yield declines as flash is formed. Moreover, material yield by a conventional production method is not sufficient. Therefore, there is a need to further improve material yield.

It is an objective of the present invention to provide a method for producing a forged crankshaft, which can improve material yield.

### SOLUTION TO PROBLEM

The method for producing a forged crankshaft according to an embodiment of the present invention is a method for producing a forged crankshaft, the forged crankshaft including: a plurality of journals each defining a rotation center; a plurality of pins each decentered with respect to the journals; a plurality of crank arms that connect the journals with the pins, respectively; and a plurality of counterweights integrally included in all or some of the crank arms.

The method for producing a forged crankshaft includes: a first preforming process for obtaining a first preform from a billet; a second preforming process for obtaining a second preform from the first preform; a final preforming process for obtaining a final preform from the second preform; and a finish forging process for forming the final preform into a finishing dimension of the crankshaft by die forging. In the first preforming process, a region to be a pin and a region to be a journal of a billet are pressed from a direction perpendicular to an axial direction of the billet. As a result, cross sectional areas of those regions are decreased thereby forming a plurality of flat parts. In the second preforming process, by using a pair of first dies, the first preform is pressed in a pressing direction, which is a width direction of the flat parts. As a result, the decentering amounts of regions to be the pins become equal to or less than the decentering amount of the finishing dimension, and thicknesses of a region to be a counterweight, and a region to be a crank arm integrally including a counterweight become larger than the thickness of the finishing dimension. In the final preforming process, by using second dies, the second preform is pressed from a direction perpendicular to an axial direction of the second preform, and further a region to be a counterweight and a region to be a crank arm integrally including the counterweight are pressed from an axial direction of the second preform. As a result, the thicknesses of a region to be a counterweight, and a region to be a crank arm integrally including a counterweight are decreased to the thickness of finishing dimension while maintaining decentering amounts of regions to be the pins.

### ADVANTAGEOUS EFFECTS OF INVENTION

The method for producing a forged crankshaft according to an embodiment of the present invention makes it possible to obtain a second preform, in which distribution of volume in an axial direction is enhanced, without forming flash, by a first preforming process and a second preforming process. Moreover, the second preform allows that the volume of a weight-corresponding part and the volume of an arm-corresponding part are appropriately distributed in a web-corresponding part. For that reason, even in the final preforming process, it is possible to obtain a final preform having a shape close to the shape of a crankshaft substantially without forming flash. Then, it is possible to form the shape of the crankshaft from the final preform by the finish forging process. This allows improvement of material yield.

### BRIEF DESCRIPTION OF DRAWINGS

FIG. 1A is a schematic diagram to show an exemplary general shape of a typical forged crankshaft.
FIG. 1B is an IB-IB sectional view of FIG. 1A.
FIG. 2A is a schematic diagram to show a billet in a conventional production process.
FIG. 2B is a schematic diagram to show a rolled preform in a conventional production process.
FIG. 2C is a schematic diagram to show a bent preform in a conventional production process.
FIG. 2D is a schematic diagram to show a rough forged preform in a conventional production process.
FIG. 2E is a schematic diagram to show a finish forged preform in a conventional production process.
FIG. 2F is a schematic diagram to show a forged crankshaft in a conventional production process.
FIG. 3A is a schematic diagram to show a billet in an exemplary production process of the present embodiment.
FIG. 3B is a schematic diagram to show a first preform in an exemplary production process of the present embodiment.
FIG. 3C is a schematic diagram to show a second preform in an exemplary production process of the present embodiment.
FIG. 3D is a schematic diagram to show a final preform in an exemplary production process of the present embodiment.
FIG. 3E is a schematic diagram to show finish forged preform in an exemplary production process of the present embodiment.
FIG. 3F is a schematic diagram to show a forged crankshaft in an exemplary production process of the present embodiment.
FIG. 4A is a longitudinal sectional view to schematically show a state before pressing in an exemplary processing flow of the first preforming process.
FIG. 4B is a longitudinal sectional view to schematically show a state when pressing is ended in an exemplary processing flow of the first preforming process.
FIG. 5A is a cross sectional view to show a region to be a journal before pressing in an exemplary processing flow of the first preforming process.
FIG. 5B is a cross sectional view to show a region to be a journal when pressing is ended in an exemplary processing flow of the first preforming process.
FIG. 6A is a cross sectional view to show a region to be a pin before pressing in an exemplary processing flow of the first preforming process.
FIG. 6B is a cross sectional view to show a region to be a pin when pressing is ended in an exemplary processing flow of the first preforming process.
FIG. 7A is a cross sectional view to show a region to be a web before pressing in an exemplary processing flow of the first preforming process.
FIG. 7B is a cross sectional view to show a region to be a web when pressing is ended in an exemplary processing flow of the first preforming process.
FIG. 8A is a longitudinal sectional view to schematically show a state when pressing is started in an exemplary processing flow of the second preforming process.
FIG. 8B is a longitudinal sectional view to schematically show a state when pressing is ended in an exemplary processing flow of the second preforming process.
FIG. 9A is a cross sectional view to show a region to be a web when pressing is started in an exemplary processing flow of the second preforming process.
FIG. 9B is a cross sectional view to show a region to be a web when pressing is ended in an exemplary processing flow of the second preforming process.
FIG. 10A is a cross sectional view to show a region to be a journal when pressing is started in an exemplary processing flow of the second preforming process.
FIG. 10B is a cross sectional view to show a region to be a journal when pressing is ended in an exemplary processing flow of the second preforming process.
FIG. 11A is a cross sectional view to show a region to be a pin when pressing is started in an exemplary processing flow of the second preforming process.
FIG. 11B is a cross sectional view to show a region to be a pin when pressing is ended in an exemplary processing flow of the second preforming process.
FIG. 12A is a longitudinal sectional view to schematically show a state before pressing in an exemplary processing flow of the final preforming process.
FIG. 12B is a longitudinal sectional view to schematically show a state when the upper die has reached a bottom dead center in an exemplary processing flow of the final preforming process.
FIG. 12C is a longitudinal sectional view to schematically show a state when axial movement is ended in an exemplary processing flow of the final preforming process.
FIG. 13 is a schematic diagram to show the posture of a second preform and a die clamping direction by upper lower dies in the final preforming process, the diagram showing the second preform viewed from the axial direction.
FIG. 14A is a cross sectional view to show a state before pressing in a case where a region to be a web is pressed from an opening side of a concave web-processing part.
FIG. 14B is a cross sectional view to show a state when pressing is ended in a case where a region to be a web is pressed from an opening side of a concave web-processing part.
FIG. 15A is a cross sectional view to show a state when pressing is started in an exemplary processing flow in which partial pressing is performed with a journal-processing part in the second preforming process.
FIG. 15B is a cross sectional view to show a state when pressing is ended in an exemplary processing flow in which partial pressing is performed with a journal-processing part in the second preforming process.
FIG. 16A is a cross sectional view to show a state when pressing is started in an exemplary processing flow in which partial pressing is performed with a pin-processing part in the second preforming process.
FIG. 16B is a cross sectional view to show a state when pressing is ended in an exemplary processing flow in which partial pressing is performed with a pin-processing part in the second preforming process.
FIG. 17A] FIG. 17A is a cross sectional view to show a state before pressing in an exemplary processing flow in which partial pressing is performed by a journal-processing part in the first preforming process.
FIG. 17B is a cross sectional view to show a state when pressing is ended in an exemplary processing flow in which partial pressing is performed by a journal-processing part in the first preforming process.
FIG. 18A is a top view to schematically show a state before pressing in the final preforming process of Embodiment 1.
FIG. 18B is a top view to schematically show a state when the upper die has reached a bottom dead center in the final preforming process of Embodiment 1.
FIG. 18C is a top view to schematically show a state when axial movement is ended in the final preforming process of Embodiment 1.
FIG. 19 is a schematic diagram to show the posture of a second preform and a die clamping direction by upper lower dies in the final preforming process of Embodiment 1, the diagram showing the second preform viewed from the axial direction.
FIG. 20A is a longitudinal sectional view to schematically show a state before pressing in the final preforming process of Embodiment 2.
FIG. 20B is a longitudinal sectional view to schematically show a state when the upper die has reached a bottom dead center in the final preforming process of Embodiment 2.
FIG. 20C is a longitudinal sectional view to schematically show a state when axial movement is ended in the final preforming process of Embodiment 2.
FIG. 21 is a longitudinal sectional view to show first dies to be used in a second preforming process of Embodiment 3.
FIG. 22 is a longitudinal sectional view to show first dies to be used in a second preforming process of Embodiment 3.

### DESCRIPTION OF EMBODIMENTS

The method for producing a forged crankshaft according to an embodiment of the present invention is a method for producing a forged crankshaft including a plurality of journals, a plurality of pins, a plurality of crank arms, and a plurality of counterweights. The plurality of journals define a rotational center. The plurality of pins are decentered with respect to the journals. The plurality of crank arms connect the journals with the pins, respectively. The plurality of the counterweights are integrally included in all or some of the crank arms, respectively.

The method for producing a forged crankshaft includes a first preforming process, a second preforming process, a final preforming process, and a finish forging process. The first preforming process obtains a first preform from a billet. The second preforming process obtains a second preform from the first preform. The final preforming process obtains a final preform from the second preform. The finish forging process forms the final preform into finishing dimensions of the crankshaft by die forging.

In the first preforming process, a region to be a pin and a region to be a journal of the billet are pressed from a direction perpendicular to the axial direction of the billet. As a result, the cross sectional areas of those regions are reduced such that a plurality of flat parts are formed.

In the second preforming process, by using a pair of first dies, the first preform is pressed in a pressing direction, which is a width direction of the flat parts. As a result, the regions to be the pins are decentered. The decentering amounts thereof will be equal to or less than the decentering amount of the finishing dimension. The thicknesses of the region to be the counterweight and the region to be the crank arm integrally including the counterweight will be more than the thickness of the finishing dimension.

In the final preforming process, by using the second dies, the second preform is pressed from a direction perpendicular to the axial direction of the second preform, and further the region to be the counterweight and region to be the crank arm integrally including the counterweight are pressed from the axial direction of the second preform. As a result, while maintaining the decentering amounts of the regions to be the pins, the thicknesses of the region to be the counterweight and the region to be the crank arm integrally including the counterweight are decreased to the thickness of the finishing dimension.

In a typical example, a pair of first dies to be used in the second preforming process includes a web-processing part that is to abut against the region to be the counterweight and the region to be the crank arm integrally including the counterweight, a pin-processing part that is to abut against the region to be the pin, and a journal-processing part that is to abut against the region to be a journal. The web-processing part includes, in either one of the pair of the first dies, an arm-processing part that is to abut against the region to be a crank arm and a weight-processing part that is to abut against the region to be a counterweight. The arm-processing part and the weight-processing part each have a generally concave shape, in which the arm-processing part is located on the concave bottom surface side and the weight-processing part is located on the concave opening side, and an opening width of the weight-processing part increases as moving away from the concave bottom surface.

Then, in the second preforming process, the flat part is pressed by the pin-processing part and the journal-processing part. As a result, the region to be the counterweight and the region to be the crank arm integrally including the counterweight are pushed into the bottom surface side of the concave web-processing part, thereby deforming the same.

According to the production method of the present embodiment, it is possible to obtain a second preform in which volume distribution in the axial direction is enhanced without forming flash by the first preforming process and the second preforming process. Moreover, in the second preform, the volume of the weight corresponding part (region to be the weight) and the volume of the arm corresponding part (region to be the arm integrally including the weight (weight is excluded)) are appropriately distributed in a web corresponding part (region to be the weight and the region to be the arm integrally including the weight). For that reason, even in the final preforming process, it is possible to obtain a final preform having a shape closer to that of the crankshaft substantially without forming flash. Thus, by the finish forging process, it is possible to create the shape of the crankshaft from the final preform. These allow to improve material yield.

Preferably, in the second preforming process, when pushing the weight-corresponding part and the arm-corresponding part into the bottom surface side of the concave web-processing part to deform the same, the weight-corresponding part and the arm-corresponding part are pressed from the opening side of the concave web-processing part to distribute volume.

In the final preforming process, the pressing direction along a direction perpendicular to the axial direction of the second preform by the second dies may be a direction perpendicular to the decentering direction of a region to be a pin, or a decentering direction of a region to be a pin.

Hereinafter, the method for producing a forged crankshaft according to the present embodiment will be described with reference to the drawings.

### 1. Exemplary production process

A forged crankshaft to be addressed by the production method of the present embodiment includes a plurality of journals J that define a rotational center, a plurality of pins P that are decentered with respect to the journals J, and a plurality of arms A that each connect the journals J with the pins P, and a plurality of weights W that are integrally included in all or some of the arms A, respectively. For example, the crankshaft of 4-cylinder 8-counterweight shown in FIGS. 1A and 1B is a target of production. In the case of a 4-cylinder 8-counterweight crankshaft, all of the plurality of arms A integrally include a weight W, respectively. The above described 4-cylinder 4-counterweight crankshaft or the like is a target of production as well. In the case of a 4-cylinder 4-counterweight crankshaft, some of the plurality of arms A integrally include a weight W, respectively. An arm that does not include any weight has an elongated circular shape.

The method for producing a forged crankshaft according to the present embodiment includes a first preforming process, a second preforming process, a final preforming process, and a finish forging process. A flash-trimming process may be added as a post process of the finish forging process. Moreover, as required, a coining process may be added after the flash-trimming process. If the adjustment of the layout angle of the pins is necessary, a twisting process may be added after the flash trimming process. A series of these processes are performed as a hot processing.

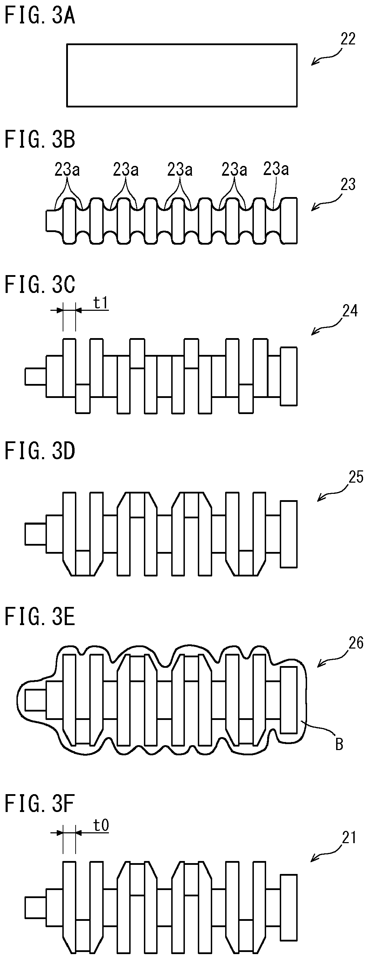

FIGS. 3A to 3F are schematic diagrams to illustrate an exemplary manufacturing process of a forged crankshaft according to the present embodiment. Among these figures, FIG. 3A shows a billet; FIG. 3B a first preform; FIG. 3C a second preform; FIG. 3D a final preform; FIG. 3E a finished forged preform; and FIG. 3F a forged crankshaft. Note that FIGS. 3A to 3F show a series of processes when producing a crankshaft 11 having a shape shown in FIG. 1.

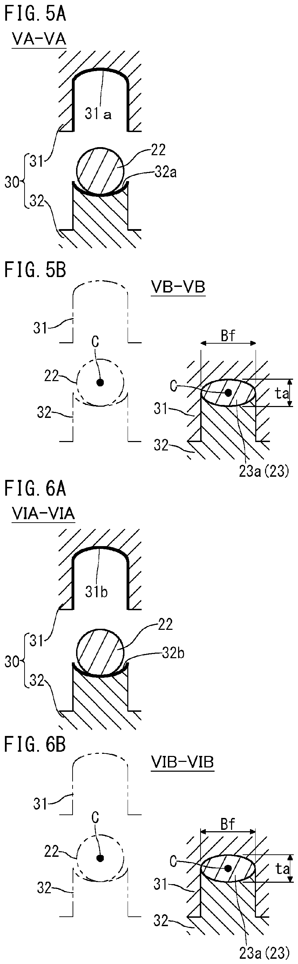

In the first preforming process, cross sectional areas of the billet 22, which is the workpiece, are reduced in each of a plurality of regions to be pins (hereinafter, referred to as "pin-corresponding parts"), and a plurality of regions to be journals (hereinafter, referred to as "journal-corresponding parts"). As a result of this, a plurality of flat parts 23a are formed in the billet. The flat part 23a is formed at positions of the pin-corresponding part and the journal-corresponding part. The flat part 23a has a shape in which a width Bf in a direction perpendicular to the pressing direction is more than a thickness ta in the pressing direction as shown in FIGS. 5B and 6B to be described below. In this way, a first preform 23 in which volume is distributed is obtained. For the first preforming process, for example, a reducing roll or a cross roll can be used. Moreover, the first preforming process may be performed according to an exemplary processing flow using third dies to be described below.

In the second preforming process, to further distribute the volume, the first preform 23 is pressed by using a pair of first dies. The pressing direction in such occasion is a width direction of the flat part 23a. As a result, a flash-free second preform 24 is obtained. In the second preform 24, the thickness t1 (see FIG. 3C) in the axial direction of the web-corresponding part is more than the thickness t0 (see FIG. 3F) of the finishing dimension. The thickness t0 of the finishing dimension means the thicknesses in the axial direction of the arm and the weight of the forged crankshaft (final product). Moreover, the decentering amount of the pin-corresponding part of the second preform 24 is equal to the decentering amount of finishing dimension. The decentering amount of the finishing dimension means the decentering amount of the pin of the forged crankshaft. The second preforming process will be described below in detail.

In the final preforming process, the second preform 24 is pressed from a direction perpendicular to the axial direction of the second preform 24 by using the second dies. Further, the web-corresponding part of the second preform 24 is pressed from the axial direction of the second preform 24. As a result, the thickness of the web-corresponding part is decreased to the thickness of the finishing dimension while maintaining the decentering amounts of the pin-corresponding parts. As a result, a final preform 25 in which an approximate shape of the forged crankshaft is formed is obtained. The decentering amount of the pin-corresponding part of the final preform 25 is not different from the decentering amount of the pin-corresponding part of the second preform 24, and is equal to the decentering amount of the finishing dimension. For the final preforming process, for example, the forming apparatus described in Patent Literature 4 can be used. However, when this apparatus is used, the die member for holding the pin-corresponding part will not move in such a way to cause the pin-corresponding part to be further decentered. An exemplary processing flow of the final preforming process will be described below.

In the finish forging process, as in the above described conventional finish forging process, the final preform 25 is formed into the finishing dimension of crankshaft by die forging. In specific, a pair of upper and lower dies is used. The final preform 25 is disposed on the lower die in a posture in which the pin-corresponding parts are aligned with each other in a horizontal plane. Then forging is performed by moving the upper die downward. As a result, as excess material flows out, flash B is formed and a finish forged preform 26 with flash is obtained. In the finish forged preform 26, a shape in accordance with the crankshaft as the final product is formed. Since an approximate shape of the crankshaft is formed in the final preform 25, it is possible to limit the formation of flash B to a minimum when subjecting the final preform 25 to forging in the finish forging process.

In the flash-trimming process, for example, with the finish forged preform 26 with flash being sandwiched between a pair of dies, the flash B is punched off by use of a tool die. Thus, the flash B is removed from the finish forged preform 26. As a result, a forged crankshaft 21 (final product) is obtained.

It is noted that Patent Literature 4 proposes a forming apparatus that forms a starting material for finish forging from a rough starting material in which a rough shape of the crankshaft is formed. The rough starting material is obtained by repeatedly subjecting a round billet to reducing rolling, bend forging, or the like. Moreover, in a post process, the starting material for finish forging is subjected to finish forging and flash trimming in that order.

In the production method of the present embodiment, in place of the reducing rolling, the bend forging, or the like in the production process of Patent Literature 4, a first preforming process and a second preforming process are adopted. The final preforming process of the present embodiment corresponds to the forming by the forming apparatus of Patent Literature 4. However, when this apparatus is used, the die member for holding the pin-corresponding part will not move in such a way to cause the pin-corresponding part to be further decentered.

### 2. Exemplary processing flow of first preforming process

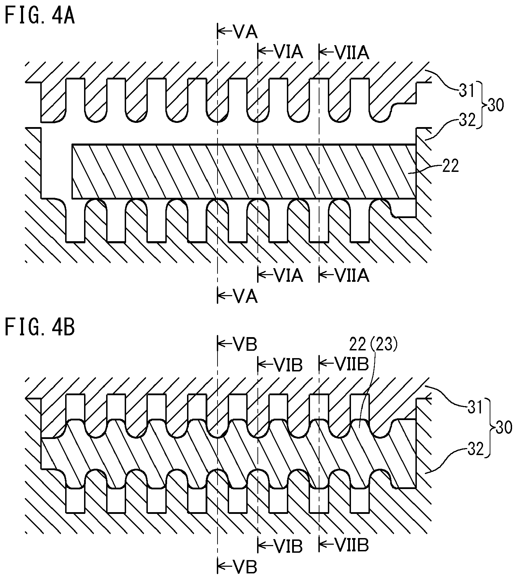

FIGS. 4A to 7B are schematic diagrams to show an exemplary processing flow of the first preforming process. Among these figures, FIG. 4A is a longitudinal sectional view to show a state before pressing, and FIG. 4B is a longitudinal sectional view to show a state when pressing is ended.

FIGS. 5A and 5B are cross sectional views to show a region to be a journal (journal-corresponding part). Among these figures, FIG. 5A shows a state before pressing, and FIG. 5B shows a state when pressing is ended. Further, FIG. 5A is a VA-VA sectional view of FIG. 4A, and FIG. 5B is a VB-VB sectional view of FIG. 4B.

FIGS. 6A and 6B are cross sectional views to show a region to be a pin (pin-corresponding part). Among these figures, FIG. 6A shows a state before pressing, and FIG. 6B shows a state when pressing is ended. Further, FIG. 6A is a VIA-VIA sectional view of FIG. 4A, and FIG. 6B is a VIB-VIB sectional view of FIG. 4B.

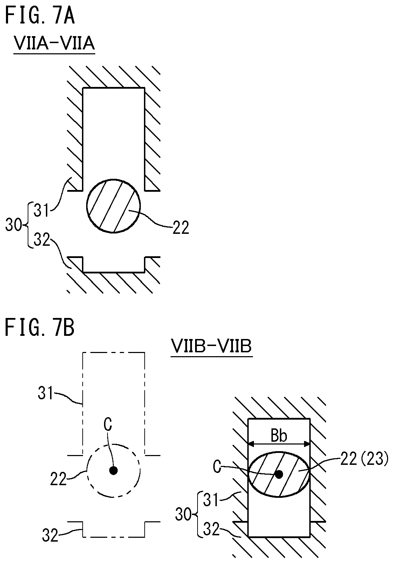

FIGS. 7A and 7B are cross sectional views to show a region to be a web (web-corresponding part). Among these figures, FIG. 7A shows a state before pressing, and FIG. 7B shows a state when pressing is ended. Further, FIG. 7A is a VIIA-VIIA sectional view of FIG. 4A, and FIG. 7B is a VIIB-VIIB sectional view of FIG. 4B.

FIGS. 4A to 7B show a billet 22 having a circular cross section, and third dies 30 consisting of a pair of upper and lower dies. The third dies 30 include a third upper die 31 and a third lower die 32. For easy understanding of the state, in FIGS. 5B, 6B, and 7B, the third upper die 31, third lower die 32, and the billet 22 before pressing are illustrated together by a two-dot chain line, and an axial position C of the journal-corresponding part is indicated by a black circle. The pair of third dies 30 includes a pin-processing part that is to abut against the pin-corresponding part, and a journal-processing part that is to abut against the journal-corresponding part.

The journal-processing part consists of, as shown by a thick line in FIG. 5A, an upper-die journal-processing part 31a provided in the third upper die 31, and a lower-die journal-processing part 32a provided in the third lower die 32. The upper-die journal-processing part 31a has a concave shape, and can accommodate the billet. The lower-die journal-processing part 32a is provided in a front end surface of a convex part. It is noted that there is no limitation on which of the upper-die journal-processing part 31a and the lower-die journal-processing part 32a is formed into a concave shape. That is, the lower-die journal-processing part 32a may have a concave shape that can accommodate the billet.

The pin-processing part consists of, as indicated by a thick line in FIG. 6A, an upper-die pin-processing part 31b provided in the third upper die 31, and a lower-die pin-processing part 32b provided in the third lower die 32. The upper-die pin-processing part 31b has a concave shape and can accommodate the billet. The lower-die pin-processing part 32b is provided in a front end surface of a convex part. It is noted that there is no limitation on which of the upper-die pin-processing part 31b and the lower-die pin-processing part 32b is formed into a concave shape. That is, the lower-die pin-processing part may have a concave shape that can accommodate the billet.

In the first preforming process, as shown in FIG. 4A, the third upper die 31 is moved upward, and with the third upper die 31 and the third lower die 32 being separated, the billet 22 is disposed between the third upper die 31 and the third lower die 32. When the third upper die 31 is moved downward from this state, the pin-corresponding part of the billet 22 is accommodated in the concave upper-die pin-processing part 31b and the journal-corresponding part is accommodated in the concave upper-die journal-processing part 31a. With the third upper die 31 being further moved downward, the billet is pressed by the upper-die pin-processing part 31b and the lower-die pin-processing part 32b, as well as by the upper-die journal-processing part 31a and the lower-die journal-processing part 32a, and the cross sectional area of the pressed region will be reduced. As a result, a flat part 23a as shown in FIGS. 5B and 6B is formed. In the cross section of the flat part 23a, the width Bf is larger than the thickness ta (see FIGS. 5B and 6B). Dimensions of the width Bf and the thickness ta of the flat part 23a may be different between the journal-corresponding part and the pin-corresponding part. After pressing by the third dies 30 is ended, the third upper die 31 is moved upward, and the processed billet 22 (first preform 23) is taken out.

Adopting such exemplary processing flow, as the pin-corresponding part and the journal-corresponding part are pressed, the material moves in the axial direction of the billet. Because of this, the material flows into the web-corresponding part between the pin-corresponding part and the journal-corresponding part. As a result, it is possible to obtain a first preform whose volume is distributed in the axial direction.

Moreover, according to the exemplary processing flow shown in FIGS. 4A to 7B, in the course of the third upper die 31 being moved downward, the opening of the concave upper-die pin-processing part 31b is blocked by the lower-die pin-processing part 32b so that a closed section is formed by the upper-die pin-processing part 31b and the lower-die pin-processing part 32b. Further, the opening of the concave upper-die journal-processing part 31a is blocked by the lower-die journal-processing part 32a so that a closed section is formed by the upper-die journal-processing part 31a and the lower-die journal-processing part 32a. As a result, no flash is formed between the third upper die 31 and the third lower die 32. Therefore, it is possible to improve material yield and enhance axial distribution of volume.

When a pair of third dies is used in the first preforming process, in view of enhancing the distribution of volume in the axial direction, the web-corresponding part needs not to be pressed by the third dies. Moreover, to adjust the shape (dimension) of the web-corresponding part, the web-corresponding part may be partially pressed with the third dies (see FIGS. 7A and 7B). For example, the web-corresponding part may be partially pressed by the third dies such that the width Bb of the web-corresponding part is equal to the width Bf of the flat part.

### 3. Exemplary processing flow of second preforming process

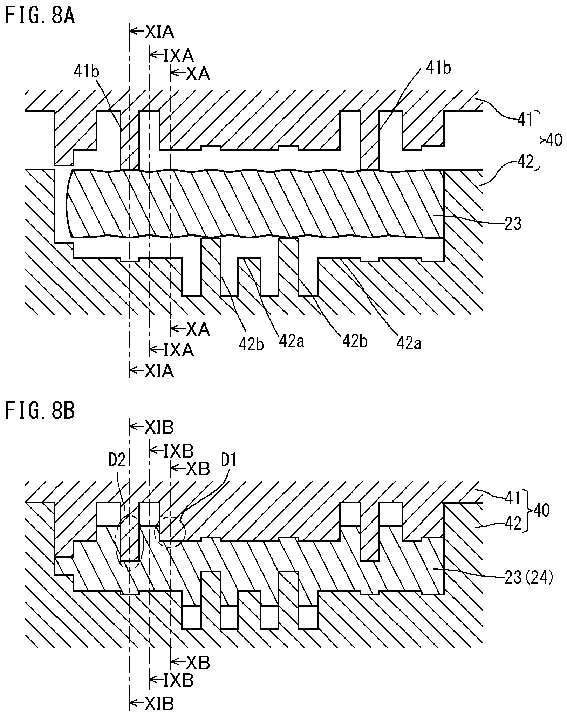

FIGS. 8A to 11B are schematic diagrams to show an exemplary processing flow of the second preforming process. Among these figures, FIG. 8A is a longitudinal sectional view to show a state when pressing is started, and FIG. 8B is a longitudinal sectional view to show a state when pressing is ended.

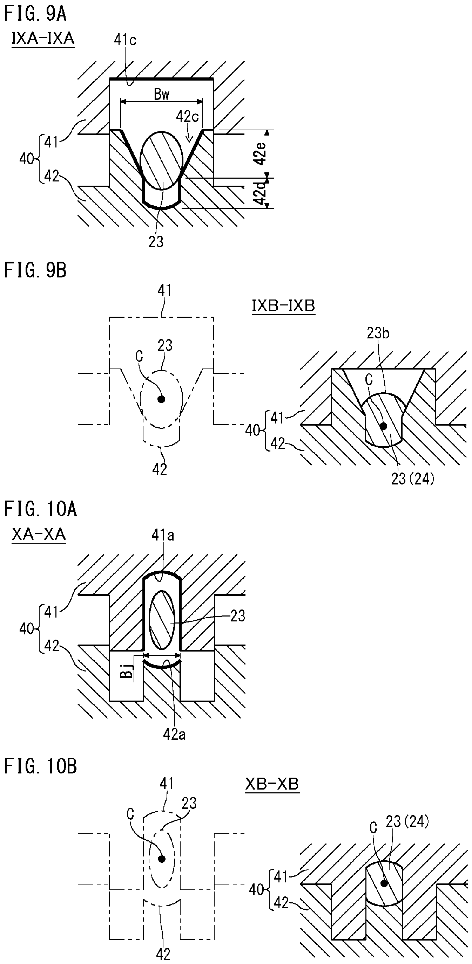

FIGS. 9A and 9B are cross sectional views to show a region to be the web (web-corresponding part). Among these figures, FIG. 9A shows a state when the pressing is started, and FIG. 9B shows a state when pressing is ended. It is noted that the FIG. 9A is an IXA-IXA sectional view of FIG. 8A and FIG. 9B is an IXB-IXB sectional view of FIG. 8B.

FIGS. 10A and 10B are cross sectional views to show a region to be the journal (journal-corresponding part). Among these figures, FIG. 10A shows a state when pressing is started, and FIG. 10B shows a state when pressing is ended. It is noted that the FIG. 10A is an XA-XA sectional view of FIG. 8A and FIG. 10B is an XB-XB sectional view of FIG. 8B.

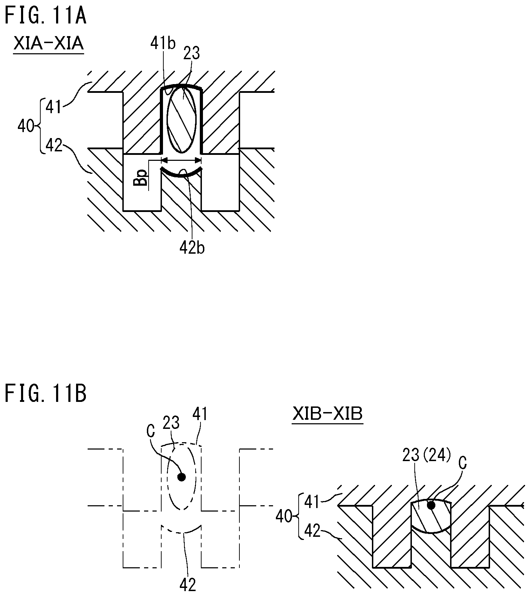

FIGS. 11A and 11B are cross sectional views to show a region to be the pin (pin-corresponding part). Among these figures, FIG. 11A shows a state when pressing is started, and FIG. 11B shows a state when pressing is ended. It is noted that the FIG. 11A is an XIA-XIA sectional view of FIG. 8A and FIG. 11B is an XIB-XIB sectional view of FIG. 8B.

FIGS. 8A to 11B show first preforms 23 obtained in the above described first preforming process, and first dies 40 consisting of a pair of upper and lower dies. The first dies 40 include a first upper die 41 and a first lower die 42. For easy understanding of the state, in FIGS. 9A, 10B, and 11B, the first upper die 41, first lower die 42, and the first preform 23 when pressing is started are illustrated together by a two-dot chain line, and the axial position C of the journal-corresponding part is indicated by a black circle. The pair of the first dies 40 includes an upper-die web-processing part 41c and lower-die web-processing part 42c that are to abut against the web-corresponding part of the first preform 23, an upper-die pin-processing part 41b and lower-die pin-processing part 42b that are to abut against the pin-corresponding part, and an upper-die journal-processing part 41a and lower-die journal-processing part 42a that are to abut against the journal-corresponding part.

The cross sectional shape of the web-processing part is, as shown by a thick line in FIG. 9A, such that the lower-die web-processing part 42c has a generally concave shape. The other upper-die web-processing part 41c has a plane shape. It is noted that which of the upper-die web-processing part 41c or the lower-die web-processing part 42c is formed into a concave shape can be appropriately set according to the shape of the forged crankshaft.

The concave web-processing part (the lower-die web-processing part 42c in FIB. 9A) has an arm-processing part 42d that is to abut against the region to be the arm (arm-corresponding part), and a weight-processing part 42e that is to abut against the region to be the weight (weight-corresponding part). The arm-processing part 42d is located on the bottom surface side of the concave lower-die web-processing part 42c, and the weight-processing part 42e is located on the opening side of the concave lower-die web-processing part 42c. Moreover, an opening width Bw of the weight-processing part 42e becomes wider as moving away from the bottom surface of the concave lower-die web-processing part 42c. For example, as shown in FIG. 9A, the weight-processing part 42e has an inclined side surface on each side. Moreover, the arm-processing part 42d has parallel side surfaces with the opening width Bw being constant.

In the second preforming process, as described above, the thickness of the web-corresponding part is processed to be more than the thickness of the finishing dimension. For this reason, the lengths in the axial direction of the upper-die web-processing part 41c and the lower-die web-processing part 42c are more than the thickness of the finishing dimension of the web (arm, and weight integrally included in the arm).

The journal-processing part consists of, as shown by a thick line in FIG. 10A, an upper-die journal-processing part 41a provided in the first upper die 41, and a lower-die journal-processing part 42a provided in the second lower die 42. The upper-die journal-processing part 41a has a concave shape and can accommodate the whole of the flat part of the first preform 23. The lower-die journal-processing part 42a is provided in a front end surface of a convex part. It is noted that there is no limitation on which of the upper-die journal-processing part 41a and the lower-die journal-processing part 42a is formed into a concave shape. That is, the lower-die journal-processing part 42a may have a concave shape which can accommodate the whole of the flat part of the first preform 23.

The pin-processing part consists of, as shown by a thick line in FIG. 11A, an upper-die pin-processing part 41b provided in the first upper die 41, and the lower-die pin-processing part 42b provided in the first lower die 42. The upper-die pin-processing part 41b has a concave shape and can accommodate the whole of the flat part of the first preform 23. The lower-die pin-processing part 42b is provided in the front end surface of a convex part. Note that there is no limitation on which of the upper-die pin-processing part 41b and the lower-die pin-processing part 42b is formed into a concave shape. That is, the lower-die pin-processing part 42b may have a concave shape which can accommodate the whole of the flat part of the first preform.

In the second preforming process, as shown in FIG. 8A, the first upper die 41 is moved upward, and with the first upper die 41 and the first lower die 42 being separated, the first preform 23 is disposed between the first upper die 41 and the first lower die 42. In such occasion, the first preform 23 is disposed in a posture in which it is rotated around the axis by 90° from a state when the first preforming process is ended such that the width direction (longitudinal diameter direction in the case of an ellipse) of the flat part corresponds to the pressing direction.

The first upper die 41 is moved downward from this state. Then, as shown in FIGS. 10A and 11A, the flat part of the first preform 23 is accommodated in a concave upper-die journal-processing part 41a and the concave upper-die pin-processing part 41b. In such occasion, as shown in FIG. 9A, the web-corresponding part will not come into contact with the bottom surface of the web-processing part, and a major part of the web-corresponding part is disposed within the weight-processing part 42e of the web-processing part.

When the first upper die 41 is further moved downward, a closed section is formed by the upper-die pin-processing part 41b and the lower-die pin-processing part 42b. Moreover, a closed section is formed by the upper-die journal-processing part 41a and the lower-die journal-processing part 42a. When the first upper die 41 is further moved downward in this state to reach a bottom dead center, the entire flat part inside the upper-die pin-processing part 41b and the lower-die pin-processing part 42b is pressed. Moreover, the entire flat part inside the upper-die journal-processing part 41a and the lower-die journal-processing part 42a is pressed. In this way, the flat parts of the first preform 23 are pressed by the first dies, resulting in that cross sectional area is reduced in the journal-corresponding part and the pin-corresponding part. Accordingly, excess material flows in the axial direction entering into the arm-corresponding part so that the distribution of volume progresses. Note that the center of gravity of the pin-corresponding part moves in the decentering direction (see a shaded arrow in FIG. 1B) of the pin. Then, the decentering amount of the pin-corresponding part becomes equal to, or less than, the decentering amount of finishing dimension. When the decentering amount of the pin-corresponding part is less than the decentering amount of the finishing dimension, the decentering amount of the finishing dimension will be obtained by die forging after the final preforming process.

While a plane-shaped web-processing part of the web-processing part (upper-die web-processing part 41c in FIGS. 9A and 9B) will not be pushed against the web-corresponding part, the web-corresponding part is pushed into the bottom surface side of the concave lower-die web-processing part 42c as pressing is performed by the first dies 40. This pushing-in occurs as the journal-corresponding part and the pin-corresponding part that are located in front and back of the web-corresponding part are pressed (deformed). When being pushed in, the web-corresponding part is deformed along the above described arm-processing part and the weight-processing part. That is, the width of the web-corresponding part is narrowed on the concave bottom surface side (arm-corresponding part), and widened on the concave opening side (weight-corresponding part). Moreover, the side surface 23b on the opening side of the web-corresponding part has an arc-shaped cross section.

When forming a weight-corresponding part with a weight-processing part in this way, the upper-die pin-processing part 41b and lower-die pin-processing part 42b, and the upper-die journal-processing part 41a and lower-die journal-processing part 42a are present in the front and back of the weight-corresponding part in the axial direction. In this case, an upper side region (portion surrounded by a circle D2 of FIG. 8B) of the upper-die pin-processing part 41b, and an upper side region (portion surrounded by an ellipse D1 of FIG. 8B) of the upper-die journal-processing part 41a work as a partition to limit the flow of material in the axial direction. As a result, material will not flow out in the axial direction from the weight-corresponding part. Moreover, as described above, since a plane shaped web-processing part (upper-die web-processing part 41c in FIGS. 9A and 9B) is not pushed against the web-corresponding part, it is possible to enhance material flow into the weight-corresponding part from the pin-corresponding part and the journal-corresponding part. Further, it becomes possible to maintain excess material as the weight-corresponding part without causing it to flow out as flash.

After pressing by the first dies 40 is ended, the first upper die 41 is moved upward, and the processed first preform (second preform 24) is taken out. In the second preform thus obtained, the thickness of the web-corresponding part is more than thickness of the finishing dimension.

According to the second preforming process, material flows to the web-corresponding part from the pin-corresponding part and the journal-corresponding part. As a result of this, volume can be distributed in the axial direction. Further, the web-corresponding part moves within the arm-processing part and the weight-processing part, and will be narrowed on the concave bottom surface side and widened on the concave opening side. Therefore, the volume is appropriately distributed in the web-corresponding part. As a result, it is possible to restrict occurrence of under-filling in the weight, in the following final preforming process and the finish forging process. Moreover, it is possible to decrease excess material to be provided in the weight-corresponding part, thus improving material yield.

In the present exemplary processing flow, the flat part is accommodated in the concave upper-die pin-processing part 41b and the concave upper-die journal-processing part 41a. Thereafter, a closed section is formed by the upper-die pin-processing part 41b and the lower-die pin-processing part 42b, and a closed section is also formed by the upper-die journal-processing part 41a and the lower-die journal-processing part 42a. Since the flat part is pressed in that state, no flash will be formed between the first upper die 41 and the first lower die 42. Therefore, it is possible to improve material yield, and to enhance the flow of material from the pin-corresponding part and the journal-corresponding part to the web-corresponding part.

Note that as described below, in the second preforming process, formation of flash may be prevented by partial pressing with the upper-die pin-processing part 41b and the lower-die pin-processing part 42b. Moreover, formation of flash may also be prevented by partial pressing with the upper-die journal-processing part 41a and the lower-die journal-processing part 42a.

### 4. Exemplary processing flow of final preforming process

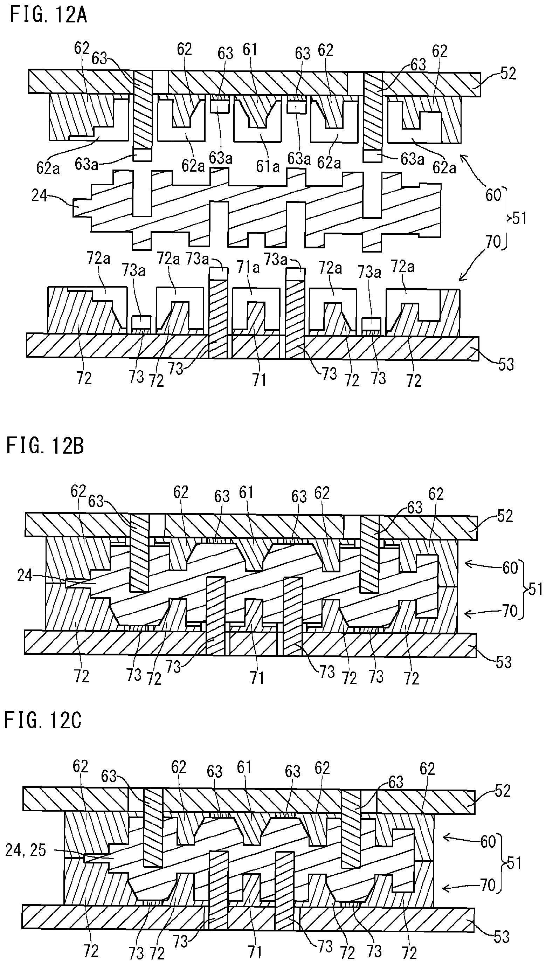

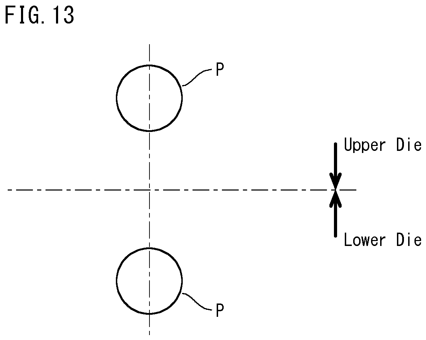

FIGS. 12A to 12C are longitudinal sectional views to schematically show an exemplary processing flow of the final preforming process. Among these figures, FIG. 12A shows a state before pressing; FIG. 12B a state when the upper die has reached a bottom dead center; and FIG. 12C a state when axial movement is ended. FIG. 13 is a schematic diagram to show the posture of a second preform and a die clamping direction by upper and lower dies in the final preforming process, the diagram showing the second preform viewed from the axial direction. FIGS. 12A to 12C show a second preform 24 obtained in the preceding second preforming process, second dies 51 consisting of a pair of upper and lower dies, an upper plate 52, and a lower plate 53. The second dies 51 include a second upper die 60 and a second lower die 70. The second upper die 60 is supported on the upper plate 52. The upper plate 52 moves up and down as a ram (not shown) of a press machine operates. The second lower die 70 is supported on the lower plate 53. The lower plate 53 is fixed onto a foundation (not shown) of the press machine.

To press the web-corresponding part form the axial direction of the second preform 24, the second upper die 60 and the second lower die 70 are divided into a plurality of members. The members constituting the second upper die 60 and the second lower die 70 are disposed in a line along the axial direction of the second preform 24. The second upper die 60 and the second lower die 70 include their respective fixed journal die members 61, 71; a plurality of movable journal die members 62, 72, and a plurality of pin die members 63, 73.

Fixed journal die members 61 and 71 are disposed at positions including middle journal-corresponding part (a region to be the third journal) in the second preform 24, and the web-corresponding part connected to the journal-corresponding part. The fixed journal die members 61 and 71 are not movable with respect to the upper plate 52 and the lower plate 53.

Movable journal die members 62 and 72 are respectively disposed at positions that include journal-corresponding parts excluding the middle one (regions to be the first, second, fourth, and fifth journals) in the second preform 24, and web-corresponding parts connected to the journal-corresponding parts. It is noted that the movable journal die members 62 and 72 on the fore side end are also present at positions of the region to be the front part. The movable journal die members 62 and 72 on the aft side end are also present respectively at a position of the region to be the flange part. The movable journal die members 62 and 72 are movable in the axial direction of the second preform 24 and in a direction facing toward the fixed journal die members 61 and 71 on the upper plate 52 and the lower plate 53.

The pin die members 63 and 73 are respectively disposed at positions of the pin-corresponding part in the second preform 24. The pin die members 63 and 73 are movable in the axial direction of the second preform 24 and in a direction facing toward the fixed journal die members 61 and 71 on the upper plate 52 and the lower plate 53. The pin die members 63 and 73 are not movable in directions other than the axial directions thereof with respect to the upper plate 52 and the lower plate 53.

In the second upper die 60 and the second lower die 70 consisting of such members, die-engraved parts (see symbols 61a, 62a, 63a, 71a, 72a, and 73a in FIG. 12A) are formed respectively. The die-engraved parts each have a shape reflecting approximate shape of the crankshaft (final product).

In the final preforming process, as shown in FIG. 12A, the second preform 24 is disposed between the second upper die 60 and the second lower die 70 with the second upper die 60 being moved upward. In that occasion, the second preform 24 is disposed in a posture in which the pin-corresponding parts are aligned in a vertical plane (see FIG. 13). From this state, the second upper die 60 is moved downward. Then, the second preform 24 is pressed from a direction perpendicular to the axial direction of the second preform 24 (vertical direction in FIGS. 12A to 13) by the second upper die 60 and the second lower die 70. As a result, the journal-corresponding part, and the pin-corresponding part of the second preform 24 are pressed thereby forming approximate shapes of the journal and the pin.

Further, the movable journal die members 62 and 72, and the pin die members 63 and 73 are moved in the axial direction of the second preform 24, and in a direction facing toward the fixed journal die members 61 and 71. This movement can be realized by, for example, a wedge mechanism or a hydraulic cylinder.

Following axial movement of the movable journal die members 62 and 72, and the pin die members 63 and 73, the web-corresponding part of the second preform 24 is pressed in the axial direction of the second preform 24. As a result, the thickness of the web-corresponding part decreases to the thickness of the finishing dimension, and approximate shapes of the arm and the weight are formed. In that occasion, the pin-corresponding part will not move in the decentering direction. That is, the decentering amount of the second pin-corresponding part is kept to be equal to the decentering amount of the finishing dimension.

After the pressing by the second dies 51 is ended, the second upper die 60 is moved upward, and the processed second preform 24 (final preform) is taken out.

According to such final preforming process, as a result of pressing the web-corresponding part in the axial direction, it is possible to improve fillability of material in the weight, thereby restricting the occurrence of under-filling. Moreover, since the fillability of material in the weight is excellent, it is possible to obtain a final preform substantially without forming flash.

According to the production method of the present embodiment, the above described first preforming process and the second preforming process make it possible to obtain a second preform without forming flash. As a result, it is possible to improve material yield.

Further, according to the production method of the present embodiment, it is possible to enhance distribution of volume in the axial direction by the first preforming process and the second preforming process. That is, it is possible to reduce the cross sectional areas of the pin-corresponding part and the journal-corresponding part, and to increase the cross sectional area of the web-corresponding part. Moreover, in the second preforming process, it is possible to make the width of the web-corresponding part narrowed at the arm-corresponding part, and widened at the weight-corresponding part. That is, it is possible to appropriately distribute volume in the web-corresponding part. For this reason, it is possible, in the following final preforming process, to suppress formation of flash and form an approximate shape of the crankshaft. Since the final preform in which an approximate shape of the crankshaft is formed is used, it is possible to limit the formation of flash to a minimum in the finish forging process as well. These allow improvement of material yield.

### 5. Volume distribution in web-corresponding part

The volume distribution in the web-corresponding part by the second preforming process can be adjusted by appropriately changing the shape of the arm-processing part depending on the shape of the forged crankshaft (final product). For example, the opening width of the arm-processing part may be changed, or an inclined surface may be provided in the arm-processing part.

The weight of the forged crankshaft (final product) has various shapes. For example, there is a case in which the weight significantly projects in the width direction, and the length of the pin in the decentering direction is small. In such a case, it is effective to change the shape of the weight-processing part in the second preforming process. Examples of changing the shape of the weight-processing part include adjustment of the angle of the inclination surface, and forming the weight-processing part into a curved surface. Moreover, volume may be distributed in the weight-corresponding part by pressing the web-corresponding part from the opening side of the concave web-processing part.

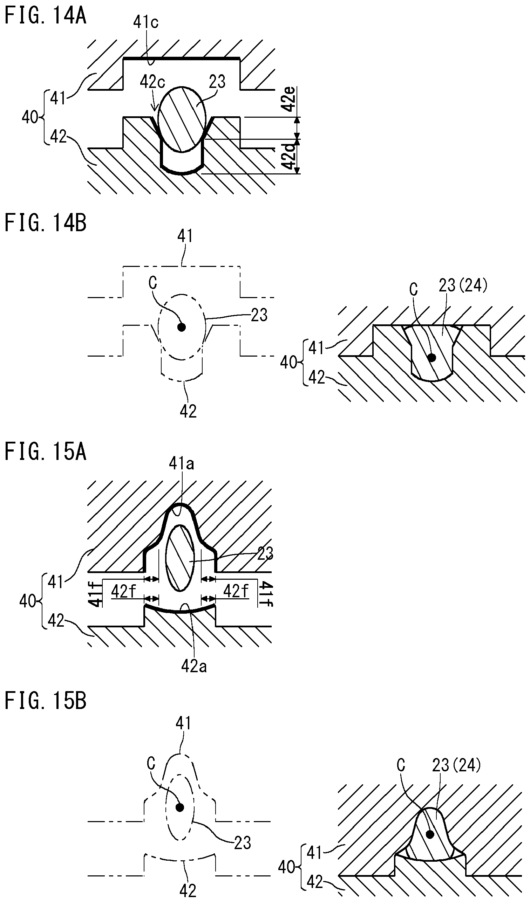

FIGS. 14A and 14B are cross sectional views to show a case in which the region to be the web (web-corresponding part) is pressed from the opening side of the concave web-processing part. Among these figures, FIG. 14A shows a state before pressing, and FIG. 14B shows a state when pressing is ended. FIGS. 14A and 14B correspond to FIGS. 9A and 9B with the depth of the concave web-processing part being made shallower.

In the exemplary processing flow shown in FIGS. 14A and 14B, similarly to the exemplary processing flow shown in FIGS. 9A and 9B, the web-corresponding part is pushed into the bottom surface side of the concave lower-die web-processing part 42c, and is deformed along the concave lower-die web-processing part 42c. In addition, since the depth of the concave lower-die web-processing part 42c is shallow, in the last stage of pressing by the first dies, the plane-shaped upper-die web-processing part 41c is pushed against the side surface on the opening side of the web-corresponding part. As a result, the web-corresponding part is pressed from the opening side of the concave lower-die web-processing part 42c so that the width is widened and the length in the decentering direction decreases. As a result, volume is distributed in the weight-corresponding part.

When the side surface on the opening side of the web-corresponding part is pressed in this way, in view of preventing that the flowing in of the material into the web-corresponding part is hindered, it is preferable to perform light pressing. Light pressing can be realized by, for example, pressing a part of the side surface 23b (see

FIG. 9B) on the opening side of the web-corresponding part. In this case, the material is released to a region that will not come into contact with the die, thus resulting in light pressing.

### 6. Preferable aspects, etc.

In view of improving the fillability of material of the weight in post processes, in the second preforming process, the thickness t1 (mm) of the web-corresponding part of the second preform is not less than 1.1, and more preferably not less than 1.5 in its ratio (t1/t0) with respect to the finish dimension t0 (mm). On the other hand, when the ratio (t1/t0) is more than 3.5, a bulge deformation area of material surface increases, and the dimensional accuracy of the outer periphery of the arm may deteriorate. For that reason, the ratio (t1/t0) is preferably not more than 3.5.

In view of preventing under-filling of the weight while ensuring fillability of the material of the weight in post processes, the cross sectional area Sw2 (mm²) of the web-corresponding part of the second preform is preferably 0.3 to 0.9 in its ratio (Sw2/Sw0) with respect to the cross sectional area Sw0 (mm²) of the web of the forged crankshaft (final product). From the same viewpoint, the cross sectional area Sw1 (mm²) of the web-corresponding part of the first preform is preferably 0.2 to 0.8 in its ratio (Sw1/Sw0) with respect to the cross sectional area Sw0 (mm²) of the web of the forged crankshaft (final product). Where, the cross sectional area Sw1 of the web-corresponding part is a total of the cross sectional area of the arm-corresponding part and the cross sectional area of the weight-corresponding part. Moreover, the cross sectional area Sw0 of the web is a total of the cross sectional area of the weight and the cross sectional area of the arm that is integrally included in the weight.

In view of decreasing flash formed in the post processes, the cross sectional area Sj2 (mm²) of the journal-corresponding part of the second preform is preferably 1.0 to 1.9 in its ratio (Sj2/Sj0) with respect to the cross sectional area Sj0 (mm²) of the journal of the forged crankshaft (final product). From the same viewpoint, the cross sectional area Sj1 (mm²) of the journal-corresponding part of the first preform is preferably 1.2 to 1.9 in its ratio (Sj1/Sj0) with respect to the cross sectional area Sj0 (mm²) of the forged crankshaft (final product).

In view of decreasing flash formed in post processes, it is preferable that the cross sectional area Sp2 (mm²) of the pin-corresponding part of the second preform is 0.7 to 1.9 in its ratio (Sp2/Sp0) with respect to the cross sectional area Sp0 (mm²) of the pin of the forged crankshaft (final product). From the same viewpoint, the cross sectional area Sp1 (mm²) of the pin-corresponding part of the first preform is preferably 0.9 to 1.9 in its ratio (Sp1/Sp0) with respect to the cross sectional area Sp0 (mm²) of the pin of the forged crankshaft (final product).

As described above, in the second preforming process, when forming a weight-corresponding part with a weight-processing part, a region of the upper side of the upper-die pin-processing part 41b and a region of the upper side of the upper-die journal-processing part 41a work as a partition to limit the flow of material in the axial direction. To enhance this effect, it becomes important to make the opening width (Bp: see FIG. 11A, Bj: see FIG. 10A) narrower in the concave upper-die pin-processing part 41b and the concave upper-die journal-processing part 41a. On the other hand, if the opening width Bp of the concave upper-die pin-processing part 41b and the opening width Bj of the concave upper-die journal-processing part 41a are too narrow, load will increase in the following processes.

From these, when adopting an exemplary processing flow as shown in FIGS. 8A to 11B, the opening width Bp (mm) of the concave upper-die pin-processing part 41b is preferably 0.5 to 1.5 in its ratio with respect to the diameter Dp (mm) of the pin of the forged crankshaft (final product). Moreover, the opening width Bj (mm) of the concave upper-die journal-processing part 41a is preferably 0.5 to 1.5 in its ratio with respect to the diameter Dj (mm) of the journal of the forged crankshaft (final product).

In the above described exemplary processing flow of the second preforming process, the first preform 23 (flat part) is pressed. During the pressing, a closed section is kept formed by the upper-die journal-processing part 41a and the lower-die journal-processing part 42a, and also a closed section is kept formed by the upper-die pin-processing part 41b and the lower-die pin-processing part 42b. This allows to prevent formation of flash. The formation of flash may be prevented by partially pressing the journal-corresponding part with the upper-die journal-processing part 41a and the lower-die journal-processing part 42a. Further, flowing out of flash may be prevented by partially pressing the pin-corresponding part with the upper-die pin-processing part 41b and the lower-die pin-processing part 42b.

FIGS. 15A and 15B are cross sectional views to show an exemplary processing flow to perform partial pressing with the journal-processing part in the second preforming process. Among these figures, FIG. 15A shows a state when pressing is started, and FIG. 15B shows a state when pressing is ended. The journal-processing parts 41a and 42a shown in FIGS. 15A and 15B correspond to the upper-die journal-processing part 41a and the lower-die journal-processing part 42a shown in FIGS. 10A and 10B with their shapes being changed. In the upper-die journal-processing part 41a and the lower-die journal-processing part 42a shown by a thick line in FIG. 15A, the upper-die journal-processing part 41a has a concave shape which can accommodate the whole of the flat part of the first preform 23. Moreover, the lower-die journal-processing part 41a is provided in the front end surface of a convex part. The upper-die journal-processing part 41a and the lower-die journal-processing part 42a respectively include relief parts 41f and 42f at both ends in the width direction, and the relief parts 41f and 42f spread in the width direction.

According to such upper-die journal-processing part 41a and lower-die journal-processing part 42a, the whole of the flat part of the first preform 23 is accommodated in the concave upper-die journal-processing part 41a as the first upper die 41 is moved downward. With the first upper die 41 being further moved downward in that state, the upper-die journal-processing part 41a comes into abutment against the flat part, and next the lower-die journal-processing part 42a comes into abutment against the flat part. As a result of such abutment, the flat part is pressed so that the cross sectional area is reduced, the material flows in the axial direction, and thus the volume is distributed. In that occasion, although some of the material flows into the relief parts 41f and 42f, a part of the relief part 41f, 42f will not come into abutment against the flat part. As a result, the flat part is partially pressed, and flash will not be formed.

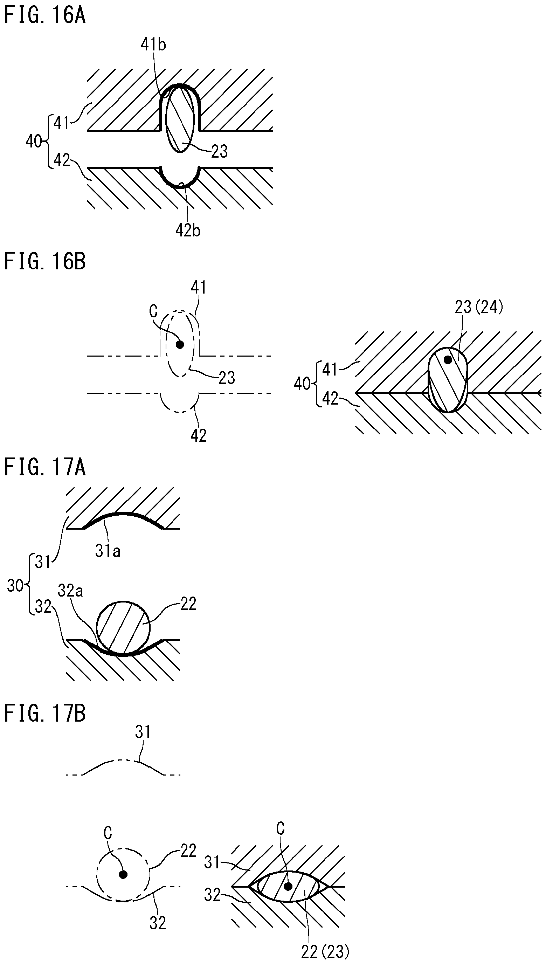

Note that formation of flash may be prevented by applying a configuration to be shown in FIG. 16 below to the journal-processing part, thereby partially pressing the journal-corresponding part. In view of enhancing volume distribution, it is preferable that the whole of the flat part is pressed with a closed section being formed by the upper-die journal-processing part 41a and the lower-die journal-processing part 42a. Moreover, in view of preventing finning of material into a gap between the upper and lower dies, it is preferable that partial pressing is performed by the upper-die journal-processing part 41a and the lower-die journal-processing part 42a.

FIGS. 16A and 16B are cross sectional views to show an exemplary processing flow to perform partial pressing by the pin-processing part in the second preforming process. Among these figures, FIG. 16A shows a state when pressing is started, and FIG. 16B shows a state when pressing is ended. The upper-die pin-processing part 41b and the lower-die pin-processing part 42b shown in FIGS. 16A and 16B correspond to the upper-die pin-processing part 41b and the lower-die pin-processing part 42b shown in FIGS. 11A and 11B with their shapes being changed. In the upper-die pin-processing part 41b and the lower-die pin-processing part 42b shown by a thick line in FIG. 16A, the upper-die pin-processing part 41b has a concave shape which can accommodate the bulk of the flat part of the first preform 23. Moreover, the lower-die pin-processing part 42b has a concave shape. The depth of the upper-die pin-processing part 41b is more than that of the lower-die pin-processing part 42b.

According to such upper-die pin-processing part 41b and lower-die pin-processing part 42b, the bulk of the flat part of the first preform 23 is accommodated in the concave upper-die pin-processing part 41b as the first upper die 41 is moved downward. When the first upper die 41 is further moved downward in that state, the upper-die pin-processing part 41b comes into abutment against the flat part, and then the lower-die pin-processing part 42b comes into abutment against the flat part. In that occasion, the upper-die pin-processing part 41b and the lower-die pin-processing part 42b both come into partial abutment against the flat part. In other words, the flat part will not come into abutment with the pin-processing part around the die-parting plane. Therefore, it is possible to cause material to flow from the pin-corresponding part to the web-corresponding part without forming flash. Further, it is also possible to cause the pin-corresponding part to be decentered.

Note that formation of flash may be prevented by applying a configuration shown in FIGS. 15A and 15B to the pin-processing part, thereby partially pressing the pin-corresponding part. In view of enhancing volume distribution, it is preferable that the whole of the flat part is pressed with a closed section being formed by the upper-die pin-processing part 41b and the lower-die pin-processing part 42b. In view of preventing finning, it is preferable that partial pressing is performed by the upper-die pin-processing part 41b and the lower-die pin-processing part 42b.

In the first preforming process described above, the entire circumference of the billet is pressed by using the third dies 30. During the pressing, a closed section is kept formed by the upper-die journal-processing part 31a and the lower-die journal-processing part 32a, and also a closed section is kept formed by the upper-die pin-processing part 31b and the lower-die pin-processing part 32b. This allows to prevent formation of flash. Formation of flash may be prevented by partially pressing the journal-corresponding part with the journal-processing part. Moreover, formation of flash may also be prevented by partially pressing the pin-corresponding part with the pin-processing part.

FIGS. 17A and 17B are cross sectional views to show an exemplary processing flow to perform partial pressing with the journal-processing part in the first preforming process. Among these figures, FIG. 17A shows a state before pressing, and FIG. 17B shows a state when pressing is ended. The upper-die journal-processing part 31a and the lower-die journal-processing part 32a shown in FIGS. 17A and 17B correspond to the upper-die journal-processing part 31a and the lower-die journal-processing part 32a shown in FIGS. 5A and 5B with their shapes being changed. As shown by a thick line in FIG. 17A, both of the upper-die journal-processing part 31a and the lower-die journal-processing part 32a each have a concave shape and a same depth.

According to such journal-processing part, as the third upper die 31 is moved down, deepest parts of the upper-die journal-processing part 31a and the lower-die journal-processing part 32a come into abutment against the billet 22. With the third upper die 31 being further moved down in that state, the upper-die journal-processing part 31a and the lower-die journal-processing part 32a both partially come into abutment against the billet. In other words, the upper-die journal-processing part 31a and the lower-die journal-processing part 32a do not abut against the billet 22 around the die-parting plane. As a result, it is possible to decrease the cross sectional area and form a flat part without forming flash. In view of enhancing volume distribution, it is preferable that the whole of the billet is pressed with a closed section being formed by the journal-processing part as shown in FIGS. 5A and 5B.

The pin-processing part of the third dies, though not shown, may adopt a similar configuration to that of the journal-processing part as shown in FIGS. 17A and 17B to partially press the billet. In view of enhancing volume distribution, it is preferable that the whole of the billet is pressed with a closed section being formed by the pin-processing part as shown in FIGS. 6A and 6B.

### 7. Other embodiments

### [Embodiment 1]

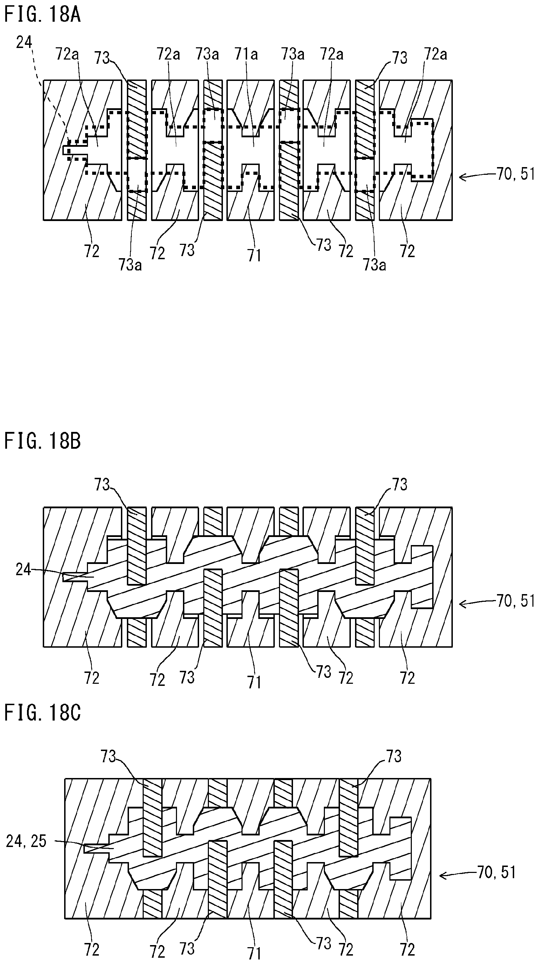

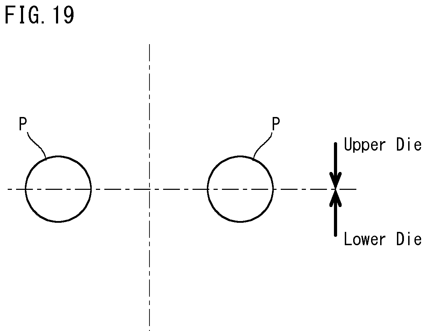

FIGS. 18A to 18C are top views to schematically show the final preforming process in the production method of Embodiment 1. Among these figures, FIG. 18A shows a state before pressing; FIG. 18B a state when the upper die has reached a bottom dead center; and FIG. 18C a state when axial movement is ended. FIG. 19 is a schematic diagram to show a posture of the second preform and the die clamping direction of the upper and lower dies in the final preforming process of Embodiment 1, the diagram showing the second preform viewed from the axial direction. The production method of Embodiment 1 is different in the form of the second dies used in the final preforming process compared with embodiments shown in FIGS. 3A to 17B. Other configurations are the same as those of the above described embodiment. For easy understanding of the state, FIGS. 18A to 18C show a second lower die 70 of the second dies 51 consisting of the second upper die and the second lower die. FIG. 18A shows a profile of the second preform 24 by a dotted line. FIGS. 18B and 18C do not show flash.

In the above described embodiment, as shown in FIG. 12A and FIG. 13, the second preform 24 is disposed on the second lower die 70 in a posture in which the pin-corresponding parts are aligned in a vertical plane. For that reason, if the second upper die 60 and the second lower die 70 are die-clamped by downward movement of the second upper die 60 as shown in FIG. 12B, the journal-corresponding part and the pin-corresponding part are pressed along the decentering direction of the pin-corresponding parts.

In contrast to this, in Embodiment 1, as shown in FIG. 18A and FIG. 19, the second preform 24 is disposed on the second lower die 70 in a position in which the pin-corresponding parts are aligned in a horizontal plane. For that reason, if the second upper die and the second lower die 70 are die-clamped by the downward movement of the second upper die as shown in FIG. 18B, the journal-corresponding part and the pin-corresponding part are pressed from a direction perpendicular to the decentering direction of the pin-corresponding parts.

In this way, in the final preforming process of Embodiment 1, the posture of the second preform 24 is such that the pin-corresponding parts are aligned in a horizontal plane. This posture is the same as that of the final preform in the following finish forging process. For that reason, the position of the flash to be formed in the final preforming process and the position of the flash to be formed in the finish forging process correspond to each other. Therefore, even if flash is formed in the final preforming process, the flash is joined to the flash to be formed in the finish forging process, and is removed in the next flash-trimming process.

### [Embodiment 2]

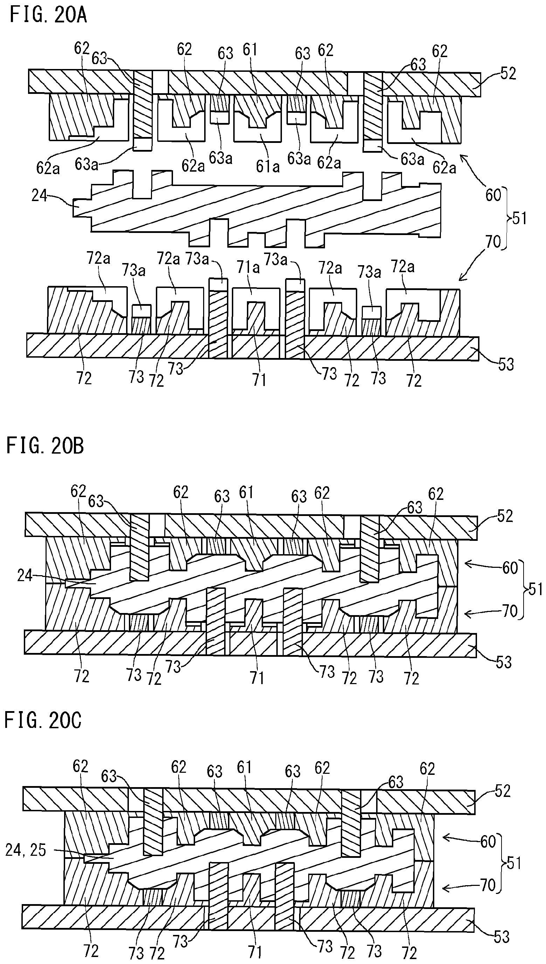

FIGS. 20A to 20C are longitudinal sectional views to schematically show the final preforming process in the production method of Embodiment 2. Among these figures, FIG. 20A shows a state before pressing; FIG. 20B a state when the upper die has reached a bottom dead center; and FIG. 20C a state when axial movement is ended. The production method of Embodiment 2 is, compared with the embodiment shown in FIGS. 3A to 17B, different in the form of the second preform 24 obtained in the second preforming process. Further, there is difference in the form of the final preform 25 obtained in the final preforming process. Other configurations are the same as those of the above described embodiment. The second preform 24 in the final preforming process has such a posture as that the pin-corresponding parts are aligned in a vertical plane.

As shown in FIG. 20A, the decentering amount of the pin-corresponding part of the second preform 24 is less than the decentering amount of the finishing dimension. In the second preforming process, the second preform 24 is formed such that the decentering amounts of the pin-corresponding parts are less than the decentering amount of the finishing dimension. Then, in the final preforming process, as in the above described embodiment, the pin-corresponding parts will not move in the decentering direction. For that reason, as shown in FIGS. 20B and 20C, the decentering amount of the pin-corresponding parts of the final preform 25 is not different from the decentering amount of the pin-corresponding parts of the second preform 24. That is, the decentering amount of the pin-corresponding part of the final preform 25 is less than the decentering amount of the finishing dimension.

Next, in the finish forging process, the final preform 25 is disposed on the lower die in a posture in which the pin-corresponding parts are aligned in a horizontal plane. Then, forging is performed by downward movement of the upper die. Therefore, in a stage when the final preform 25 is disposed on the lower die, the pin-corresponding part of the final preform 25 is deviated from the engraved part for pin, which is formed in the lower die. This is because the decentering amount of the pin-corresponding part of the final preform 25 is less than the decentering amount of the finishing dimension. Even in such a state, the downwardly moving upper die comes into contact with the pin-corresponding part, and as a result of this, the pin-corresponding part is pushed into the engraved part for pin of the lower die. Therefore, the pin having the decentering amount of the finishing dimension is obtained.

Where, in view of ensuring the fillability of material into the engraved part for pin, the decentering amount E3 (mm) of the pin-corresponding part of the final preform 25 is preferably not less than (1.0-Dp/2/E0) and less than 1.0 in its ratio (E3/E0) with respect to the decentering amount E0 of the finishing dimension (decentering amount of pin of forged crankshaft). Where, Dp means a diameter of the pin of the finishing dimension (diameter of the pin of a forged crankshaft). From the same point of view, the cross sectional area Sp3 (mm²) of the pin-corresponding part of the final preform 25 is preferably not less than 0.7 and not more than 1.5, more preferably not less than 0.75 and not more than 1.1 in its ratio (Sp3/Sp0) with respect to the cross sectional area Sp0 (mm²) of the pin of the forged crankshaft.

As the second dies to be used in the final preforming process of Embodiment 2, the second dies having a configuration as that of Embodiment 1 may be adopted.

### [Embodiment 3]

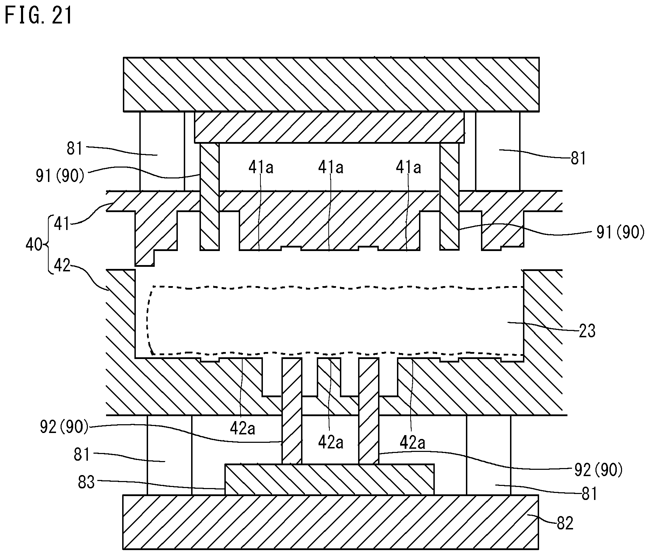

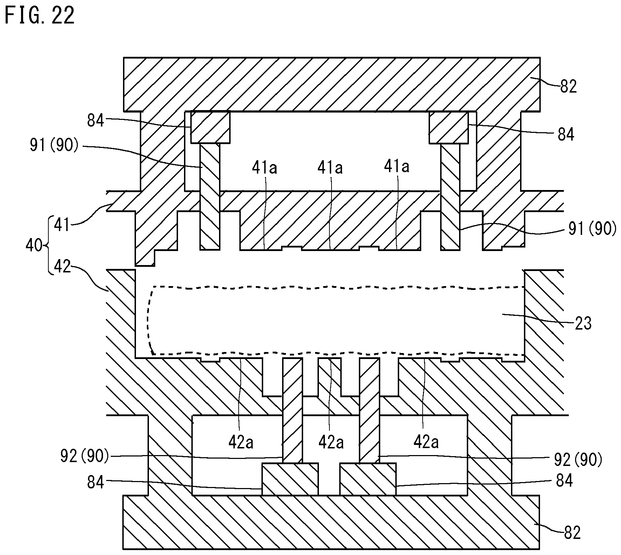

FIGS. 21 and 22 are longitudinal sectional views to show the first dies to be used in the second preforming process of Embodiment 3. The second preforming process of Embodiment 3 is different in the configuration of the first dies to be used in the second preforming process compared with the embodiment shown in FIGS. 3A to 17B.

In Embodiments 1 and 2 described above, the following problems may arise. Referring to FIG. 8A, the first preform 23 is disposed on the first lower die 42 with the first upper die 41 and the first lower die 42 being separated. As described above, in the second preforming process, the pin-corresponding parts are to be decentered. The lower-die pin-processing part 42b, which processes the second and third pin-corresponding parts of the first preform 23, projects further than the lower-die journal-processing part 42a. Therefore, when the first preform 23 is disposed in the first lower die 42, the first preform 23 is supported at two points by the two lower-die pin-processing parts 42b. Moreover, the upper-die pin-processing part 41b is disposed closer to the end part of the first preform 23 than the lower-die pin-processing part 42b. When the first dies 40 press the first preform 23 in this state, load is applied on the first preform 23 with the lower-die pin-processing part 42b being as a fulcrum, and the upper-die pin-processing part 41b being as a power point. As a result, bending moment acts on the first preform 23. When the bending moment acting on the first preform 23 is too large, the first preform 23 will be curved. When the first upper die 41 reaches a bottom dead center with the first preform 23 being curved, the position of the first preform 23 to be pressed by the first dies 40 will be deviated from a predetermined position. That is, a situation such as that the pin-processing part of the first dies 40 presses the web-corresponding part of the first preform 23 may occur. For that reason, under-filling or the like may occur in the second preform after pressing.

Referring to FIGS. 21 and 22, the production apparatus of Embodiment 3 includes a fourth upper die 91 and a fourth lower die 92 in place of the upper-die pin-processing part 41b and the lower-die pin-processing part 42b. The fourth upper die and the fourth lower die 92 can move upward and downward independently from the first dies 40. Before pressing of the first preform 23, the fourth lower die 92 is disposed at the same height as or at a lower point than the lower-die journal-processing part 42a is. That is, the fourth lower die 92 does not project further than the lower-die journal-processing part 42a. Therefore, even if the first preform 23 is disposed in the first lower die 42 before starting pressing, the first preform 23 will not be supported by the fourth lower die 92. The first preform 23 is supported by a plurality of lower-die journal-processing parts 42a. The area in which the plurality of lower-die journal-processing parts 42a support the first preform 23 is larger than the area in which the fourth lower die 92 supports the first preform. When the first dies 40 press the first preform 23 in this state, the journal-corresponding part will be uniformly pressed. That is, load is not likely to be applied on the first preform 23. Therefore, bending moment is not likely to act on the first preform 23.

Moreover, in the first dies 40 of Embodiment 3, pressing of the first preform 23 by the fourth lower die 92 is started at the same time as the pressing of the first preform 23 by the lower-die journal-processing part 42a, or after starting the pressing of the first preform 23 by the lower-die journal-processing part 42a. Therefore, while the pin-corresponding part is pressed, the journal-corresponding part of the first preform 23 is pressed by the upper-die journal-processing part 41a and the lower-die journal-processing part 42a. That is, the journal-corresponding part of the first preform 23 is restricted by the upper-die journal-processing part 41a and the lower-die journal-processing part 42a.

In short, since the fourth lower die 92 independently moves upward and downward, and the journal-corresponding part of the first preform 23 is pressed concurrently with, or preceding to, the pin-corresponding parts, the first preform 23 is not likely to be curved during the pressing of the pin-corresponding parts. As a result, the first preform 23 in which volume is distributed is pressed at a predetermined position of the first dies 40, and therefore under-filling or the like is not likely to occur in the second preform after pressing. The same applies to the fourth upper die 91. That is, the production apparatus of Embodiment 3 includes fourth dies 90 that consist of a fourth upper die 91 to press the fourth pin-corresponding part, and a fourth lower die 92 to press the second and third pin-corresponding parts.

The configurations of the first dies 40 and the fourth dies 90 of Embodiment 3 will be described. The fourth dies 90 include a control mechanism for causing the fourth upper die 91 and the fourth lower die 92 to be independently moved upward and downward. The control mechanism is, for example, a die cushion and a hydraulic cylinder.

Referring to FIG. 21, a case in which the control mechanism is a die cushion 81 will be described. The first lower die 42 is supported by a bolster base 82 via the die cushion 81. The die cushion 81 has a cushioning function. The fourth lower die 92 is supported by the bolster base 82 via a pin base 83. When the first lower die 42 starts pressing the first preform 23, the fourth lower die 92 starts projecting from the first lower die 42 due to the cushioning function of the die cushion 81. The die cushion 81 is set such that the fourth lower die 92 comes into abutment against the pin-corresponding part of the first preform 23 concurrently, or after, the upper-die journal-processing part 41a and the lower-die journal-processing part 42a abut against the journal-corresponding part of the first preform 23. As a result, the pin-corresponding part of the first preform 23 will be pressed concurrently with the journal-corresponding part, or after the pressing of the journal-corresponding part is started.

Referring to FIG. 22, a case in which the control mechanism is a hydraulic cylinder 84 will be described. The hydraulic cylinder 84 can move the fourth lower die 92 upward and downward. The fourth lower die 92 is supported by the bolster base 82 via the hydraulic cylinder 84. Then the first lower die 42 starts pressing the first preform 23, the hydraulic cylinder is activated, and the fourth lower die 92 starts projecting from the first lower die 42. The hydraulic cylinder 84 is set such that the fourth lower die 92 abuts against the pin-corresponding parts of the first preform 23 concurrently, or after, the upper-die journal-processing part 41a and the lower-die journal-processing part 42a abut against the journal-corresponding part of the first preform 23. As a result, the pin-corresponding part of the first preform 23 will be pressed concurrently with the journal-corresponding part, or after the pressing of the journal-corresponding part is started.

In either case in which the control mechanism is a die cushion or a hydraulic cylinder, the timing that the fourth lower die 92 projects from the first lower die 42 is appropriately set. That is, the pin-corresponding part of the first preform 23 may be pressed concurrently with the pressing of the journal-corresponding part. The pin-corresponding part may be pressed within a period from the start to the end of pressing of the journal corresponding part. Also the pin-corresponding part may be pressed after the pressing of the journal-corresponding part is completed.

The same applies to the fourth upper die 91. Therefore, detailed description of the fourth upper die 91 will be omitted.

Moreover, it goes without saying that the present invention will not be limited to the above described embodiments, and can be modified in various ways within a range not departing from the spirit of the present invention. The first preforming process, the second preforming process, and the final preforming process of the above described embodiment can be applied, for example, even to a case in which a crankshaft including elongated circle shaped arms with no weight (hereinafter, also referred to as "weightless arm") (for example: 4-cylinder 4-counterweight crankshaft) is produced. In this case, the forming of a weightless arm corresponds to forming of a web in those processes. In the second preform obtained by the second preforming process, the thickness in the axial direction of a region to be the weightless arm (hereinafter, also referred to as "weightless-arm-corresponding part") may be more than, or equal to, the thickness of finishing dimension. When the thickness of the weightless-arm-corresponding part of the second preform is more than that of the finishing dimension, the weightless-arm-corresponding part is pressed in the axial direction by the final preforming process, and the thickness is decreased to the thickness of the finishing dimension. When the thickness of the weightless-arm-corresponding part of the second preform is equal to that of the finishing dimension, the weightless-arm-corresponding part will not be pressed in the axial direction by the final preforming process, and the thickness is maintained as the thickness of the finishing dimension.

### INDUSTRIAL APPLICABILITY

The present invention can be effectively used for producing a forged crankshaft to be mounted on a reciprocating engine.

### REFERENCE SIGNS LIST

21: Forged crankshaft
22: Billet
23: First preform
23a: Flat part
23b: Side surface on opening side of web-corresponding part
24: Second preform
25: Final preform
26: Finish forged preform
30: Third die
31: Third upper die
31a: Upper-die journal-processing part
31b: Upper-die pin-processing part
32: Third lower die
32a: Lower-die journal-processing part
32b: Lower-die pin-processing part
40: First die
41: First upper die
41a: Upper-die journal-processing part
41b: Upper-die pin-processing part
41c: Upper-die web-processing part
41f: Relief part
42: First lower die
42a: Lower-die journal-processing part
42b: Lower-die pin-processing part
42c: Lower-die web-processing part
42d: Arm-processing part
42e: Weight-processing part
42f: Relief part
51: Second die
52: Upper plate
53: Lower plate
60: Second upper die
61: Fixed journal die member
62: Movable journal die member
63: Pin die member
70: Second lower die
71: Fixed journal die member
72: Movable journal die member
73: Pin die member
90: Fourth die
91: Fourth upper die
92: Fourth lower die
A, A1 to A8: Crank arm
J, J1 to J5: Journal
P, P1 to P4: Pin
W, W1 to W8: Counterweight
B: Flash

## Claims

1. A production method of a forged crankshaft, the forged crankshaft including:
a plurality of journals each defining a rotation center; a plurality of pins each decentered with respect to the journals; a plurality of crank arms that connect the journals with the pins, respectively; and a plurality of counterweights integrally included in all or some of the crank arms, the production method comprising:
a first preforming process for obtaining a first preform from a billet;
a second preforming process for obtaining a second preform from the first preform;
a final preforming process for obtaining a final preform from the second preform; and
a finish forging process for forming the final preform into a finishing dimension of the forged crankshaft by die forging, wherein
in the first preforming process, a region to be the pin and a region to be the journal of the billet are pressed from a direction perpendicular to an axial direction of the billet, so that a cross sectional area of each of the regions is reduced to form a plurality of flat parts, wherein
in the second preforming process, by using a pair of first dies, the first preform is pressed in a width direction of the flat part, which is a pressing direction, so that a decentering amount of the region to be the pin is equal to, or less than a decentering amount of the finishing dimension, and thicknesses of a region to be the counterweight and a region to be the crank arm integrally including the counterweight are more than a thickness of the finishing dimension, and wherein
in the final preforming process, by using second dies, the second preform is pressed in a direction perpendicular to an axial direction of the second preform, and further, the region to be the counterweight and the region to be the crank arm integrally including the counterweight are pressed in the axial direction of the second preform such that thicknesses of the region to be the counterweight and the region to be the crank arm integrally including the counterweight are reduced to the thickness of the finishing dimension while the decentering amount of the region to be the pin is maintained.

2. The producing method of a forged crankshaft according to claim 1, wherein
in the final preforming process, the pressing direction along the direction perpendicular to the axial direction of the second preform by the second dies is a direction perpendicular to a decentering direction of the region to be the pin.
